(19) Europäisches Patentamt
European Patent Office
Office européen des brevets

(11) EP 2 001 138 A2

(12) EUROPEAN PATENT APPLICATION

(43) Date of publication:
10.12.2008 Bulletin 2008/50

(51) Int Cl.:
H04B 1/707 (2006.01)    H04B 1/69 (2006.01)

(21) Application number: 08157615.9

(22) Date of filing: 04.06.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 05.06.2007 US 810356

(71) Applicant: Honeywell International Inc.
Morristown NJ 07960 (US)

(72) Inventors:
• Pataguppe, Chandrashekhar Thejaswi
KA 560076, Bangalore (IN)

• Ganapathy, Viswanath
KA 560076, Bangalore (IN)
• Raina, Manik
KA 560076, Bangalore (IN)
• Patro, Ranjeet
Honeywell International Inc.,
1Morristown,
NJ 07962-2245 (US)
• Shamiah, Manohar
KA 560076, Bangalore (IN)

(74) Representative: Buckley, Guy Julian
Patent Outsourcing Limited
1 King Street
Bakewell
Derbyshire DE45 1DZ (GB)

(54) Receiver for communication system

(57) A receiver includes a channel providing information received from wireless communications, including information from a selected user. A minimum mean square error combiner is coupled to the channel for receiving samples in a symbol duration and minimizes mean square error in such samples. The combiner has coefficients derived from a training sequence. Information of the selected user is extracted from a mixture consisting of information from unintended users, interference and noise.

FIG. 1A

*FIG. 1B*

*FIG. 1C*

## Description

## Background

Ultra-Wideband (UWB) is a technology for transmitting information spread over a large bandwidth, such as >500 MHz. UWB is an emerging technology inviting major advances in wireless communication, networking, radar and positioning systems. UWB technology has drawn the attention of industry for its attractive features such as low power density, rich multi-path diversity, low complexity base band processing, multi-access capability, timing precision etc. On the other hand the stringent timing requirement and frequency selective nature of the UWB channels pose challenge in the receiver processing. Moreover, as the UWB is emerging as a technology, it is finding its use in multiuser systems and hence efficient multi-user detection is also a challenging area to pursue for the researchers.

The ability to resolve multipath is one of the most attractive features of UWB. A Rake receiver can be employed to exploit the multipath diversity. The high data nature of UWB coupled with frequency selective nature of the channel make the system suffer from severe intersymbol interference (ISI). To combat the effect of ISI, Rake may be followed by a equalizer. In some prior systems, combined RAKE and equalization methods were proposed for direct sequence UWB (DS-UWB) systems.

Problems in wireless communication include multipath fading, intersymbol interference (ISI), MUI and other interference which leads to severe distortion in the transmitted waveform when it arrives at a receiver. The multipath fading and ISI effect are due to the hostile nature of the wireless medium. Moreover, modem wireless systems support multiple users and also have to be interoperable with other systems. They suffer severely by the problem of MUI and other interferences. Traditionally these problems have been considered separately and receiver architecture for alleviating them have been proposed in a one-by-one manner. However, this approach increases the complexity of the receiver owing to the inclusion of several functional blocks.

Problems in RAKE and equalization methods are further aggravated in multiuser communications where the desired information is embedded with multiuser interference (MUI). The Rake receiver, using maximum ratio combining (MRC), is optimum only when the disturbance to the desired signal is sourced by additive white Gaussian noise(AWGN). In the presence of MUI the Rake combiner will exhibit an error floor depending on the signal-to-interference-plus-noise ratio(SINR).

## Brief Description of the Drawings

FIG. 1A is a block diagram of a linear detector according to an example embodiment.

FIG. 1B is a block diagram of a nonlinear detector according to an example embodiment.

FIG. 1C is a block diagram of a combiner according to an example embodiment.

FIG. 2 is Fig. 2 is a graph illustrating bit error rates for a linear multi-user detector according to an example embodiment.

FIG. 3 is a graph illustrating bit error rates for a non-linear multi-user detector according to an example embodiment.

FIG. 4 is a graph comparing bit error rates of a multi-user detector based receiver with conventional receivers based on RAKE and an MMSE. equalizer according to an example embodiment.

FIG. 5 is a graph illustrating bit error rates for a fixed SNR non-linear multiuser detector according to an example embodiment.

FIG. 6 is a table comparing characteristics of various detectors according to an example embodiment.

FIG. 7 a block diagram of an example computer system that may perform methods and algorithms according to an example embodiment.

## Detailed Description

In the following description, reference is made to the accompanying drawings that form a part hereof, and in which is shown by way of illustration specific embodiments which may be practiced. These embodiments are described in sufficient detail to enable those skilled in the art to practice the invention, and it is to be understood that other embodiments may be utilized and that structural, logical and electrical changes may be made without departing from the scope of the present invention. The following description of example embodiments is, therefore, not to be taken in a limited sense, and the scope of the present invention is defined by the appended claims.

The functions or algorithms described herein may be implemented in software or a combination of software and human implemented procedures in one embodiment. The software may consist of computer executable instructions stored on computer readable media such as memory or other type of storage devices. The term "computer readable media" is also used to represent any means by which the computer readable instructions may be received by the computer, such as by different forms of wired or wireless transmissions. Further, such functions correspond to modules, which are software, hardware, firmware or any combination thereof. Multiple functions may be performed in one or more modules as desired, and the embodiments described are merely examples. The software may be executed on a digital signal processor, ASIC, microprocessor, or other type of processor operating on a computer system, such as a personal computer, server or other computer system.

A method for multiuser detection is based on minimum mean square error (MMSE) for a DS-UWB multiuser communication system. The method exploits the inherent multi path diversity and also mitigates the effects of both inter symbol interference (ISI) and multiuser interference (MUI). Simulation results show that the given algorithms perform better than the other known detectors in literature. A closed form expression for the bit error rate (BER) results of the above method is also provided. In one embodiment, a direct sequence-code division multiple access (DS-CDMA) based UWB multi-user communication system and simple linear and nonlinear receiver structures combine multipath diversity and reject ISI as well as multiuser interference. A system model is presented. A linear detection scheme is described and analyzed. Similarly, a non-linear detector is described and analyzed.

System Model

Consider a DS-CDMA based UWB multi-user system where there are $N_u$ active users. At the transmitter $u$, BPSK symbols $a_k^u \in \{-1,1\}$ are spread and modulated with chip pulses $g_c(t)$. Defining the chip waveform

$$g^u(t) = \sum_{i=0}^{Nc-1} c_i^u g_C(t - iT_c)$$

where $\{c_i^u\}$, $c_i^u \in \{-1,+1\}$ denotes the spreading code of length $N_c$ and chip duration $T_c$. The transmit signal with the channel response $h^u(t) = \sum_{l=1}^{L} \alpha_l \delta(t - \tau_l)$ can now be written as

$$r^u(t) \;=\; \sum_{k=-\infty}^{\infty} a_k^u g^u(t - kT_s) * h^u(t), \qquad\qquad (1)$$

$$=\; \sum_{k=-\infty}^{\infty} a_k^u p^u(t - kT_s) \qquad\qquad (2)$$

where $T_s$ denotes the symbol duration, $p^u(t) = g^u(t)*h^u(t)$ and * denotes the convolution operator.

Assuming perfect synchronism, the signal at the receiver input is given by

$$r(t) = \sum_{u=1}^{N_u} \sum_{k=-\infty}^{\infty} a_k^u p^u(t - kT_s) + n(t)$$

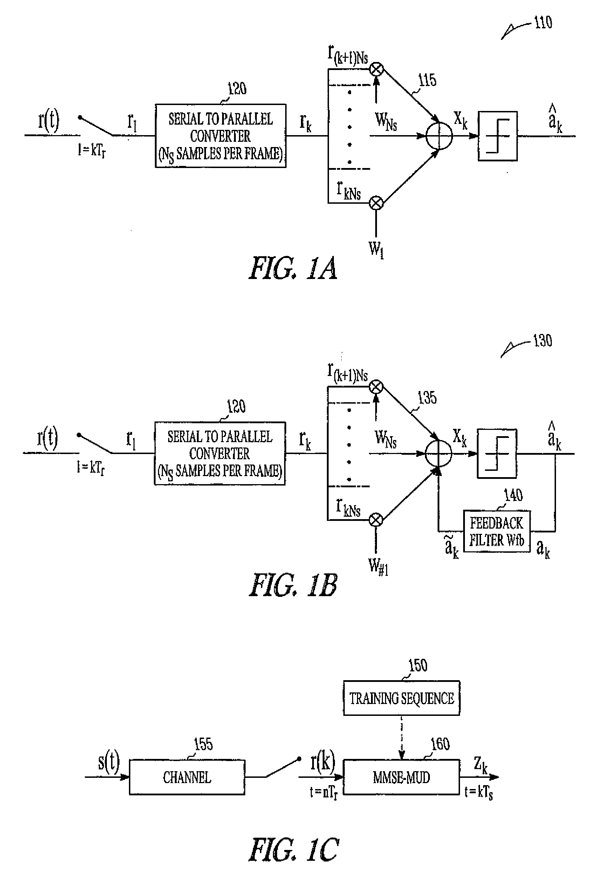

In one embodiment, a receiver is designed that extracts the information of the desired user from this mixture. Traditional receiver architectures, which employ RAKE based reception, entail knowledge about the channel and the spreading sequence of the user. The designed receiver does not impose any of these requirements. Two types of detectors are described as shown in FIGs. 1A and 1B.

Linear Multiuser Detector (Linear MUD)

In one embodiment, the architecture of a linear receiver may be based on a simple MMSE linear combiner (Weiner Filter) which optimally combines the received samples in a symbol duration so as to minimize the mean square error. The receiver structure is as shown at 110 in FIG. 1A, which depicts a block diagram of a linear detector. The receiver has a feed-forward filter (FFF) 115. The input to the FFF 115 at time $kT_s$ is the vector $r_k$ (cf.(6)) that has been converted from serial to parallel at 120. MMSE criterion is again applied to optimize the coefficients of the filter.

The determination of the coefficients of the combiner may be carried through a training sequence method 150 as shown in FIG. 1C. FIG. 1C illustrates signals sampled from a channel 155 and provided to an MMSE-MUD block 160 that has tap coefficients derived from training sequence 150. Combiner tap coefficients may be determined based on MMSE criterion.

Let the sampling rate $T_r$ at the receiver be chosen such that such that $\dfrac{T_s}{T_r} = N_s > 1$. Then the discrete equivalent of the received waveform becomes

$$r_l = \sum_{u=1,k=-\infty}^{N_u} \sum_{k=-\infty}^{\infty} a_k^u p^u(l - kN_s) + n_l. \tag{3}$$

Assume $u = 1$ is the user of interest at the receiver. By dropping the superscript for the user 1, (3) may be rewritten as

$$r_l = \sum_{k=-\infty}^{\infty} a_k p(l - kN_s) + \sum_{u \neq 1} \sum_{k=-\infty}^{\infty} a_k^u p^u(l - kN_s) + n_l \tag{4}$$

where the second term represents the multiuser interierence(MUI) part. Representing MUI as $m_l$,

$$r_l = \sum_{k=-\infty}^{\infty} a_k p(l - kN_s) + m_l + n_l. \tag{5}$$

The received sequence may be fragmented into frames of $N_s$ samples each frame representing the sampled version of the received symbol of the user 1. That is, $r_k = [r_{(k+1),N_s} \cdots r_{k,N_s=1}]^T$, where $r_k$ represents the samples of the received waveform corresponding to the $a_k$ transmitted. The objective is to choose the linear filter taps $\hat{w} = [w_1,...w_{N_s}]$ which minimizes the mean square error $E\|a_k - wr_k\|^2$. The solution to this problem is given by the Weiner-Hopf equation [10],

$$\hat{w} = \gamma_{ar}\Gamma_{rr}^{-1}.$$

where $\Gamma_{rr} = E[r_k r_k^T]$ represents the received vector autocorrelation matrix and $\gamma_{ar} = E[a_k r_k^T]$ is a vector representing the cross correlation between the desired symbol and the corresponding received samples.

The symbol estimate at the receiver can be computed as

$$\hat{a}_k = sign(\hat{w}r_k)$$

Expression for the linear MUD

Analysis of the linear receiver is provided along with consideration of some special cases. With the slight abuse of the notation, let us denote $P_k(j)=[P((k-j)N_s+N_s)...p((k-j)N_s+1)]^T$, $m_k=[m_{(k+1),N_s}...m_{k,N_s+1}]^T$ and $n_k = [n_{(k+1),N_s}...n_{k.N_s+1}]^T$.

The discussion is restricted to the channels with a finite memory of $L_s$ symbol durations. Then, the sampled vector at the receiver $r_k$ can be represented by

$$\mathbf{r}_k = [r_{(k+1).N_s} \cdots r_{k.N_s+1}]^T = \sum_{j=k-L_s+1}^{k} a_j \mathbf{p}_k(j) + \mathbf{m}_k + \mathbf{n}_k.$$

Further, by defining $a_k = [a_{k-Ls+1}]^T$ and a matrix $P = [p_0(0), ..., p_0(L_s - 1)]$, the above equation may be rewritten as

$$\mathbf{r}_k = [r_{(k+1).N_s} \cdots r_{k.N_s+1}]^T = \mathbf{P} \mathbf{a}_k + \mathbf{m}_k + \mathbf{n}_k. \tag{6}$$

Remark: Consider the waveform response $p(t)$ of the channel. The length of the channel is of duration $L_s$ symbol periods. The corresponding discrete form $\{p(n)\}$ then, spans for a duration of $N_s \cdot L_s$ samples. P is essentially the matrix form of the sequence $\{p(n)\}$. The dimension of $\mathbf{P}$ is $N_s \times L_s$. Note that P does not depend on the frame index $k$.

Evaluation of the correlation matrices is now provided. It is assumed that the signal received at the receivers due to different users are uncorrelated.

$$\Gamma_{\mathbf{rr}} = E\left[\mathbf{r}_k \mathbf{r}_k^T\right] = \mathbf{P} E[\mathbf{a}_k \mathbf{a}_k^T] \mathbf{P}^T + \mathbf{R}_m + \mathbf{R}_n,$$

where $R_m$ and $R_n$ represent the correlation matrices of MUI and noise respectively.

The training sequence $\{a_k\}$, chosen is assumed to be pseudo random so that $E[a_l a_j] = \sigma_a^2 \delta(l - j)$. Therefore,

$$\Gamma_{\mathbf{rr}} = \sigma_a^2 \mathbf{P}.\mathbf{P}^T + \mathbf{R}_m + \mathbf{R}_n.$$

Similarly,

$$\gamma_{\mathbf{ar}} = \sigma_a^2 \mathbf{p}_0^T(0).$$

The Weiner filter

$$\mathbf{w} = \sigma_a^2 \mathbf{p}_0^T(0) \left[\sigma_a^2 \mathbf{P}.\mathbf{P}^T + \mathbf{R}_m + \mathbf{R}_n\right]^{-1}. \tag{7}$$

Next, some special cases are considered.
Single User AWGN and fading with no ISI:

Given that $N_u = 1$, $\mathbf{R}_n = \sigma_n^2 \cdot \mathbf{I}_{N_s}$ and $L_s = 1$. The P = $p_0(0)$. From (7) we have,

$$\mathbf{w} = \frac{\mathbf{p}_0^T(0)}{\|\mathbf{p}_0(0)\|^2 + \frac{\sigma_n^2}{\sigma_a^2}},$$

which essentially represents an MRC combiner.

Multi User AWGN and fading with no ISI:

Given $N_u$ users, $\mathbf{R}_n = \sigma_n^2 . \mathbf{I}_{N_s}$ and $L_s = 1$. Then $\mathbf{P}^u = p_o^u(0)$, $u = 1, \ldots N_u$. From (7) for the user $m$,

$$\mathbf{w}^m = \left[ \sum_{u=1}^{N_u} \sigma_u^2 \mathbf{p}_0^u(0) \mathbf{p}_0^u(0)^T + \sigma_n^2 . \mathbf{I}_{N_s} \right]^{-1} \sigma_m^2 \mathbf{p}_0^m(0),$$

which essentially represents a blind multiuser detector.

BER Analysis

The probability of error of the linear MUD is now derived. The Beaulieu Series method is adopted for the evaluation of the probability of error. The output of the combiner $y_k$ at the $k^{th}$ symbol period can be written as

$$\begin{aligned}
x_k &= \mathbf{w}\mathbf{r}_k \\
&= \sum_{j=k}^{k-L_s+1} a_j \mathbf{w}\mathbf{p}_k(j) + \sum_{u \neq 1} \sum_{l=k}^{k-L_s^u+1} a_l^u \mathbf{w}\mathbf{p}_k^u(j) + \mathbf{w}\mathbf{n}_k \\
&= q_{00} a_k + \sum_{j=k-L_s+1}^{k-1} a_j q_{kj} + \sum_{u \neq 1} \sum_{l=k}^{k-L_s^u+1} a_l^u q_{kl}^u + N_k,
\end{aligned} \qquad (8)$$

where $q_{kj}^u = w p_k^u(j)$ and $N_k = w n_k \sim N(0, \|w\|^2 . \sigma_n^2)$.

Given that $a_i^u \in \{-1, +1\}$ and are assumed to iid and uniformly distributed, effect of other terms in (8) on the first term is evaluated. Fixing the value of $a_k$. Then, the characteristic function of $x_k$ is

$$\begin{aligned}
\phi_x(\omega) &= \exp(j\omega a_k q_{00}) \exp\left( \frac{-\omega^2 . \|\mathbf{w}\|^2 \sigma_n^2}{2} \right) \\
&\times \prod_{j=k-L_s+1}^{k-1} \cos(\omega q_{kj}) \prod_{u \neq 1} \prod_{l=k-L_s^u+1}^{k} \cos(\omega q_{kl}^u).
\end{aligned} \qquad (9)$$

Now, the probability of a bit error $P_b$ can be given by [1]

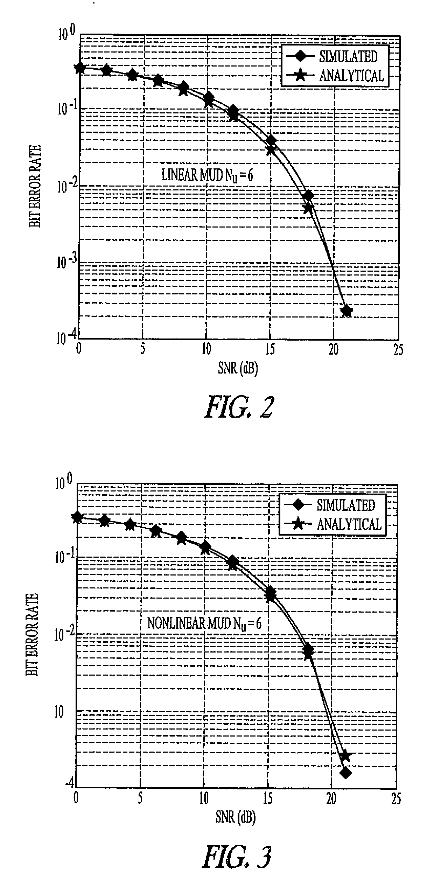

$$\begin{aligned}
P_b &\approx \frac{1}{2} - \sum_{n \in \{1,3,5,\ldots\}}^{\infty} \frac{2 \sin(n\omega_0 q_{00}) \exp\left( \frac{-n^2 \omega_0^2 \|w\|^2 \sigma_n^2}{2} \right)}{n\pi} \\
&\times \prod_{j=k-L_s+1}^{k-1} \cos(n\omega_0 q_{kj}) \prod_{u \neq 1} \prod_{l=k-L_s^u+1}^{k} \cos(n\omega_0 q_{kl}^u),
\end{aligned} \qquad (10)$$

where $\omega_0 = \dfrac{2\pi}{T}$, parameter $T$ governs the sampling rate in the frequency domain. Higher values of $T$ ensure negligible approximation error. FIG. 2 shows the comparison of the analytically obtained BER against the simulated one. It can be seen from the figure that the analytical curve is in close approximation with that of simulation. This is expected because the curves are evaluated without making Gaussian assumption over the interference part.

Non-Linear Multiuser Detector (Non-Linear MUD)

In the previous section, the linear receiver which performs linear MMSE estimation of the symbol by processing the received samples of the corresponding symbol duration was considered. However, due to the memory of the channel, one could potentially use the estimates of the previous symbols while attempting to estimate the current symbol. This can be achieved by exploiting the familiar Decision Feedback principle. FIG. 1B depicts a block diagram of a nonlinear receiver 130. The receiver has two filters one feed-forward filter (FFF) 135 and the other is a feedback filter (FBF) 140. The input to the FFF 135 at time $kT_s$ is the vector $r_k$ (equation 6) which is provided by serial to parallel converter 120. The FFF 135 is similar to the Weiner combiner studied in the previous section which generates a test statistic from the received samples. The FBF 140 has at its input the sequence of decisions on previously detected symbols. FBF 140 is intended to remove the part of the ISI from the current symbol caused by previously detected symbols. MMSE criterion is again applied to optimize the coefficients of the two filters. Note that the input samples to FFF 135 are spaced $T_r$ seconds apart while the input samples of the FBF 140 are spaced $T_s$ seconds apart.

The equalizer output is represented as

$$x_k = \mathbf{w}_{ff}\mathbf{r}_k + \mathbf{w}_{fb}\hat{\mathbf{a}}_{k-1}$$

where, the row vector $w_{ff}$ represents $N_s$ length FF filter and $w_{fb}$ is a $N_b$ length vector representing the FB filter. The set of past decisions is represented by $\hat{a}_{k-1} = [\hat{a}_{k-1}...\hat{a}_{k-N_b}]^T$. The estimate $\hat{a}_k$ of $a_k$ symbol can be obtained by passing $x_k$ through the detector i.e, $\hat{a}_{k-1} = sign(x_k)$. The objective is to choose the filter coefficient set $w = [w_{ff}, w_{fb}]$ which minimizes the MSE

$$E\left[\|\hat{a}_k - x_k\|^2\right] = E\left[\|a_k - \mathbf{w}\mathbf{Y}_k\|^2\right],$$

where $Y_k = [r_k^T, \hat{a}_{k-1}^T]^T$. Proceeding similar to previous sections, we have the optimal solution for $w$ as

$$\hat{\mathbf{w}} = \gamma_{ay}\Gamma_{yy}^{-1},$$

where $\Gamma_{yy} = E[Y_k Y_k^T]$ represents the autocorrelation matrix and $\gamma_{ay} = E[a_k Y_k^T]$ represents the cross correlation matrix. Assuming that there is no error in the feedback, the matrices can be written as

$$\Gamma_{yy} = \begin{bmatrix} \Gamma_{rr} & E[\mathbf{Y}_k \mathbf{a}_{k-1}^T] \\ E[\mathbf{a}_{k-1}\mathbf{Y}_k^T] & \sigma_a^2 \mathbf{I}_{N_b} \end{bmatrix}$$

and

$$\gamma_{ay} = \begin{bmatrix} \gamma_{ar} \\ 0 \end{bmatrix}.$$

Proceeding on similar lines with the previous section, the bit error rate of the nonlinear MUD can be evaluated using Beaulieu series. Therefore, by denoting $q_{kj}^u = w_{ff} p_k^u(j)$ we have,

$$P_b \approx \frac{1}{2} - \sum_{n=\{1,3,5,\ldots\}}^{\infty} \frac{2\sin(nw_0 q_{00}) \exp\left(\frac{-n^2 \omega_0^2 \|\hat{w}_{ff}\|^2 \sigma_n^2}{2}\right)}{n\pi}$$

$$\times \prod_{j=1}^{N_{fb}} \cos(nw_0 w_{fb,j}) \prod_{j=k-L_s+1}^{k-1} \cos(nw_0 q_{kj})$$

$$\times \prod_{u \neq 1} \prod_{l=k-L_s^u+1}^{k} \cos(nw_0 q_{kl}^u), \qquad (11)$$

where, $w_{fbj}$ represents the $j^{th}$ tap of the feedback filter. Note that the first product part of the summation represents the effect due to the feedback. FIG. 3 shows the comparison of the analytically obtained BER against the simulated one. As before, the curves match very closely.

Results and Discussion

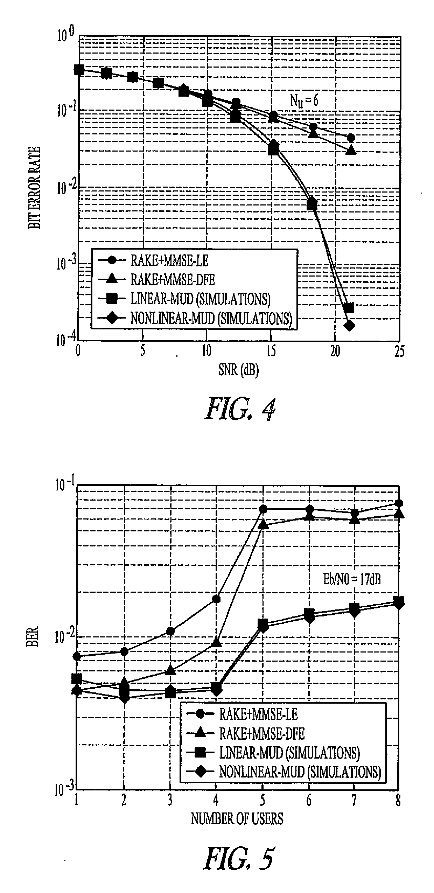

In this section, the BER performance of the proposed detectors is presented for a DS-UWB system. Comparison with the other detectors in literature is also provided. For the simulation, a multiuser DS-UWB system with antipodal modulation scheme was considered. The DS sequences had a processing gain of 8. The signal at the receiver was sampled at twice the chip rate, $T_r = T_{chip}/2$. The channel is simulated using the IEEE 802.15.3a channel model. For comparison, a) RAKE-MMSE-Linear equalizer, b) RAKE-MMSE-DFE, c)Linear MUD and d) Non-Linear MUD were considered. FIG. 4 shows the BER vs Average SNR plot of the different detectors when $N_u$ = 6. It is clear from the figure that the proposed schemes perform significantly better than the other detectors. The BER performance as a function of users for a fixed SNR is shown in Fig. 5. FIG. 5 illustrates that Linear/Non-linear MUD yield a significant gain with the number of users. This is expected because as $N_u$ increases, MUI increases. The RAKE receiver with MRC is optimal only in the single user case with the Gaussian interference whereas the proposed MUDs have the inherent ability to mitigate the effects of the multiuser interference. For $N_u$ =1 there is no significant difference in the performance of the receivers considered. Non-linear detectors outperform linear detectors due to the presence of feedback.

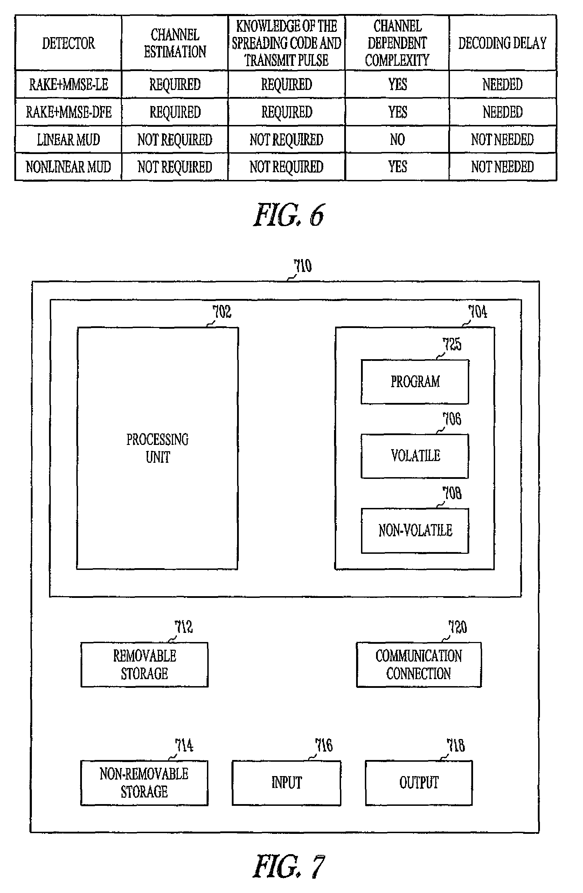

Various parameters for comparison are presented in FIG. 6. The proposed detectors entail no explicit knowledge of the channel parameter and hence are less sensitive to estimation errors. They also do not need explicit knowledge of the spreading sequence and the transmitted pulse shape.

Conclusions

Two multiuser detection methods are described based on minimum mean square error(MMSE) for a DS-UWB multiuser communication system. The methods exploit the inherent multipath diversity and also mitigates the effects of both intersymbol interference (ISI) and multiuser interference (MUI). BER performance for various detectors was described. Closed form expressions for the BER results of the above methods were also provided. Further, a comparison table was presented to underline the simplicity of the proposed algorithms over others.

A block diagram of a computer system that executes programming for performing the above methods and algorithms is shown in FIG. 7. A general computing device in the form of a computer 710, may include a processing unit 702, memory 704, removable storage 712, and non-removable storage 714. Memory 704 may include volatile memory 706 and non-volatile memory 708. Computer 710 may include - or have access to a computing environment that includes - a variety of computer-readable media, such as volatile memory 706 and non-volatile memory 708, removable storage 712 and non-removable storage 714. Computer storage includes random access memory (RAM), read only memory (ROM), erasable programmable read-only memory (EPROM) & electrically erasable programmable read-only memory (EEPROM), flash memory or other memory technologies, compact disc read-only memory (CD ROM), Digital Versatile Disks (DVD) or other optical disk storage, magnetic cassettes, magnetic tape, magnetic disk storage or other magnetic storage devices, or any other medium capable of storing computer-readable instructions. Computer 710 may include or have access to a computing environment that includes input 716, output 718, and a communication connection 720. The computer may operate in a networked environment using a communication connection to connect to one or more remote computers. The remote computer may include a personal computer (PC), server, router, network PC, a peer device or other common network node, or the like. The communication connection may include a Local Area Network (LAN), a Wide Area Network (WAN) or other networks.

Computer-readable instructions stored on a computer-readable medium are executable by the processing unit 702 of the computer 710. A hard drive, CD-ROM, and RAM are some examples of articles including a computer-readable medium.

The Abstract is provided to comply with 37 C.F.R. §1.72(b) to allow the reader to quickly ascertain the nature and gist of the technical disclosure. The Abstract is submitted with the understanding that it will not be used to interpret or limit the scope or meaning of the claims.

## Claims

1. A receiver comprising:

   a channel providing information received from wireless communications; and
   a minimum mean square error combiner coupled to the channel for receiving samples in a symbol duration and minimizes mean square error in such samples, wherein the combiner has coefficients derived from a training sequence.

2. The receiver of claim 1 wherein information of a desired user is extracted from a mixture consisting of information from unintended users, interference and noise.

3. The receiver of claim 1 wherein the coefficients comprise linear filter taps $\hat{w} = [w_1,...w_{N_s}]$ which minimize the mean square error $E\|\alpha_k - wr_k\|^2$, where $r_k$ represents the samples of the received waveform corresponding to the $\alpha_k$ transmitted.

4. The receiver of claim 3 wherein minimizing the mean square error comprises solving:

$$\hat{w} = \gamma_{ar}.\Gamma_{rr}^{-1}.$$

   where $\Gamma_{rr} = E[r_k r_k^T]$ represents the received vector autocorrelation matrix and $\gamma_{ar} = E[a_k r_k^T]$ is a vector representing the cross correlation between the desired symbol and the corresponding received samples.

5. The receiver of claim 1 wherein the training sequence is assumed to be pseudo random.

6. The receiver of claim 1 wherein the combiner does not require knowledge of the channel or a spreading code of a user.

7. The receiver of claim 1 wherein the combiner comprises a linear or nonlinear detector.

8. The receiver of claim 7 wherein the nonlinear detector comprises a feed forward filter and a feedback filter having trained coefficients.

9. The receiver of claim 8 wherein a filter coefficient set w = [$w_{ff}$, $w_{fb}$] is selected which minimizes a mean square error:

$$E\left[\|a_k - x_k\|^2\right] = E\left[\|a_k - wY_k\|^2\right],$$

   where $Y_k = [r_k^T, \hat{a}_{k-1}^T]^T$, wherein a set of past decisions is represented by $\hat{a}_{k-1} = [\hat{a}_{k-1}...\hat{a}_{k-N_b}]^T$, and an estimate $\hat{a}_k$ of $a_k$ symbol can be obtained by passing $x_k$ through the detector i.e, $\hat{a}_{k-1} = sign(x_k)$..

10. The receiver of claim 9 wherein a solution for w is:

$$\hat{W} = \gamma_{ay}\Gamma_{yy}^{-1},$$

where $\Gamma_{yy} = E[Y_k Y_k^T]$ represents an autocorrelation matrix and $\gamma_{ay} = E[a_k Y_k^T]$ represents a cross correlation matrix.

**11.** The receiver of claim 7 wherein the linear detector comprises a feed forward filter.

**12.** A receiver comprising:

means for providing information including information from a selected user received from wireless communications; and
means for receiving samples in a symbol duration and minimizing mean square error in such samples.

**13.** The receiver of claim 12 wherein the means for receiving samples includes a combiner with coefficients derived from a training sequence.

**14.** The receiver of claim 13 wherein information of the selected user is extracted from a mixture consisting of information from unintended users, interference and noise.

**15.** The receiver of claim 13 wherein the coefficients comprise linear filter taps w = [$w_1$ ,...$w_{N_s}$] which minimize the mean square error $E\|a_k - wr_k\|^2$, where $r_k$ represents the samples of the received waveform corresponding to the $a_k$ transmitted.

**16.** The receiver of claim 15 wherein minimizing the mean square error comprises solving:

$$\hat{W} = \gamma_{ar}\Gamma_{rr}^{-1}.$$

where $\Gamma_{rr} = E[r_k r_k^T]$ represents the received vector autocorrelation matrix and $\gamma_{ar} = E[a_k r_k^T]$ is a vector representing the cross correlation between the desired symbol and the corresponding received samples.

**17.** The receiver of claim 13 wherein the combiner does not require knowledge of the channel or a spreading code of a user.

**18.** The receiver of claim 13 wherein the combiner comprises a linear or nonlinear detector.

**19.** A method comprising:

receiving information from wireless communications including information from a selected user;
receiving samples in a symbol duration; and
minimizing mean square error in such samples, wherein the combiner has coefficients derived from a training sequence.

**20.** The method of claim 19 wherein information of the selected user is extracted from a mixture consisting of information from unintended users, interference and noise.

*FIG. 1A*

*FIG. 1B*

*FIG. 1C*

**FIG. 2**

**FIG. 3**

FIG. 4

FIG. 5

| DETECTOR | CHANNEL ESTIMATION | KNOWLEDGE OF THE SPREADING CODE AND TRANSMIT PULSE | CHANNEL DEPENDENT COMPLEXITY | DECODING DELAY |
|---|---|---|---|---|
| RAKE+MMSE-LE | REQUIRED | REQUIRED | YES | NEEDED |
| RAKE+MMSE-DFE | REQUIRED | REQUIRED | YES | NEEDED |
| LINEAR MUD | NOT REQUIRED | NOT REQUIRED | NO | NOT NEEDED |
| NONLINEAR MUD | NOT REQUIRED | NOT REQUIRED | YES | NOT NEEDED |

*FIG. 6*

*FIG. 7*